Europäisches Patentamt

European Patent Office

Office européen des brevets

(11) Veröffentlichungsnummer: **0 427 090 A2**

# EUROPÄISCHE PATENTANMELDUNG

(21) Anmeldenummer: 90120774.6

(22) Anmeldetag: 30.10.90

(51) Int. Cl.⁵: **B27B 5/32**, B24B 45/00, B23Q 3/12

(30) Priorität: 03.11.89 DE 3936630

(43) Veröffentlichungstag der Anmeldung:
15.05.91 Patentblatt 91/20

(84) Benannte Vertragsstaaten:
CH DE FR GB IT LI SE

(71) Anmelder: Ledermann GmbH
Stadionstrasse 2-2a
W-7240 Horb am Neckar(DE)

(72) Erfinder: Katz, Otto
Hohenzollernring 18
W-7240 Horb a. N. 1 -Bildechingen(DE)

(74) Vertreter: Jackisch, Walter, Dipl.-Ing. et al
Menzelstrasse 40
W-7000 Stuttgart 1(DE)

(54) Werkzeugträger für Rotationswerkzeuge, insbesondere für Kreissägeblätter, Zerspaner usw.

(57) Die Erfindung betrifft einen Werkzeugträger für Rotationswerkzeuge, insbesondere für Kreissägeblätter, Zerspaner usw. Es sind Werkzeugträger für Rotationswerkzeuge mit einer Schnellwechsel-Spannvorrichtung bekannt, wobei ein Nabenteil mit einer zentrischen Bohrung auf einer Antriebswelle angeordnet ist. Durch das für den Werkzeugträgerwechsel bedingte Spiel zwischen Antriebswelle und Nabenteil treten Planlauf- und Rundlauffehler auf. Es wird daher vorgeschlagen, in dem Nabenteil (3) nahe der Antriebswelle (2) Mittel (35, 36) zur Erzeugung einer radialen Pressung vorzusehen. Außerdem soll eine Einrichtung (25) vorhanden sein, die den Werkzeugträger (1) auf der Antriebswelle (2) in axialer Richtung sichert. Die Erfindung kann für eine Vielzahl von rotierenden Werkzeugen benutzt werden. Sie eignet sich insbesondere für Kreissägen.

Fig. 1

EP 0 427 090 A2

# WERKZEUGTRÄGER FÜR ROTATIONSWERKZEUGE, INSBESONDERE FÜR KREISSÄGEBLÄTTER, ZERSPANER USW.

Die Erfindung bezieht sich auf einen Werkzeugträger für Rotationswerkzeuge der im Oberbegriff des Anspruchs 1 angegebenen Gattung.

Aus der DE-PS 23 20 919 ist ein Werkzeugträger mit einer Schnellwechsel-Spannvorrichtung bekannt, der ein Nabenteil mit einer zentrischen Bohrung umfaßt, in welche eine Antriebswelle eingreift. Um ein leichtes Aufschieben und Abziehen des Werkzeugträgers von der Antriebswelle zu erreichen, muß die Passung von Antriebswelle und zentrischer Bohrung ein entsprechendes Spiel besitzen. Dieses Spiel führt jedoch zu Planlauf- und Rundlauffehlern, insbesondere dann, wenn die Teile häufig benutzt wurden und bereits die Paßflächen etwas ausgeschlagen sind. Das Spiel zwischen Antriebswelle und zentrischer Bohrung durch eine Preßpassung zu eliminieren, ist jedoch auch nicht möglich, da dadurch das Aufschieben und Abziehen des Werkzeugträgers von der Antriebswelle unmöglich, zumindest jedoch äußerst kraftaufwendig würde, so daß der Werkzeugträgerwechsel mühsam und zeitaufwendig wird. Bei entsprechendem Spiel zwischen Antriebswelle und zentrischer Bohrung treten nicht nur die bereits erwähnten Planlauf- und Rundlauffehler des Werk zeugs auf. Es ist darüberhinaus nicht auszuschließen, daß der Werkzeugträger auf der Antriebswelle nicht genügend Halt besitzt und allmählich von der Antriebswelle herunterrutscht.

Es ist daher die Aufgabe der vorliegenden Erfindung, einen Werkzeugträger der genannten Gattung derart weiterzubilden, daß dieser problemlos und rasch auf der Antriebswelle montierbar ist, der einen sicheren Halt auf der Antriebswelle besitzt und durch den Planlauf- und/oder Rundlauffehler des Werkzeugs ausgeschlossen sind.

Diese Aufgabe wird bei einem Werkzeugträger der genannten Art durch die kennzeichnenden Merkmale des Anspruchs 1 gelöst. Der wesentliche Vorteil des erfindungsgemäßen Werkzeugträgers ist darin zu sehen, daß der Querschnitt der zentrischen Bohrung in gewissen Grenzen veränderbar ist, wodurch für das Aufschieben und Abziehen des Werkzeugträgers von der Antriebswelle ein ausreichendes Spiel zwischen diesen Teilen besteht und dieses Spiel vor in Betriebsetzung des Werkzeugs eliminiert wird. Damit auch im Falle eines unvorhergesehenen Verlustes der Pressung der Werkzeugträger nicht von der Antriebswelle rutscht, ist eine Sicherungseinrichtung gegen axiales Verschieben vorgesehen.

Gemäß einer ersten Weiterbildung des Erfindungsgegenstandes umfaßt die Einrichtung zur axialen Sicherung des Werkzeugträgers einen Sicherungsstift, der radial nach innen von der Kraft einer Feder beaufschlagt ist und hinter eine radiale Kante der Antriebswelle greift. Durch die Kraft der Feder wird der Sicherungsstift in Richtung auf die Antriebswelle belastet, so daß ein unbeabsichtigtes Ent riegeln nicht auftreten kann. Alternativ zu dem Sicherungsstift sieht eine zweite Ausführungsform der Erfindung vor, daß die Einrichtung zur axialen Sicherung des Werkzeugträgers eine von der Kraft einer Feder beaufschlagte und um eine Achse schwenkbare Sperrklinke ist, die mit einem Ende hinter eine radiale Kante der Antriebswelle greift. Die Sperrklinke wird dabei ebenso wie der bereits beschriebene Sicherungsstift selbsttätig in die Sperrstellung gebracht. Die radiale Kante an der Antriebswelle kann auf einfache Weise durch einen auf der Antriebswelle 2 montierten Wellenkeil 26 gebildet sein, der für die Drehmomentübertragung sowieso vorhanden ist. Der Wellenkeil kann einen Zahnstangenabschnitt umfassen, in den Zähne des Sicherungsstiftes oder der Sperrklinke eingreifen. Diese Anordnung ermöglicht die Ausbildung einer Rasteinrichtung, die beim Aufschieben des Werkzeugträgers auf die Antriebswelle selbständig weiterrastet, bis der Werkzeugträger seine Endlage erreicht hat. Durch die orthogonalen Zahnflanken in entgegengesetzter Richtung ist ein unbeabsichtigtes Verrutschen oder Abziehen des Werkzeugträgers nicht möglich.

Zur Entriegelung der Sperrklinke oder des Sperrstiftes können sowohl pneumatisch oder hydraulisch beaufschlagte oder manuelle Betätigungsmittel vorgesehen sein, wie diese beispielsweise in den Merkmalen der Ansprüche 6 bis 9 angegeben sind. Der Sperrstift oder die Sperrklinke sind vorzugsweise in einem Ringbauteil angeordnet, das entweder auf der dem Werkzeug entfernt liegenden Seite des Nabenteils angebaut oder auf einem zylindrischen Abschnitt dieses Nabenteils aufgesetzt ist.

Die Mittel zur Erzeugung der radialen Pressung umfassen vorzugsweise eine im Nabenteil in der Nähe der Antriebs welle angeordnete Druckkammer, die parallel zur Antriebswelle verläuft und die mit einem Druckmittelkanal in Verbindung steht. Durch den Druckmittelkanal kann Druckmittel in die Druckkammer gepreßt werden, so daß die relativ dünn ausgestaltete Materialschicht zwischen Druckkammer und Antriebswelle radial nach innen gepreßt wird und einen engen Verbund zwischen Nabenteil und Antriebswelle erzeugt. In vorteilhafter Weiterbildung dieser Anordnung sind über den Kreisumfang gleichmäßig verteilt mehrere Druckkammern angeordnet, die über Druckmittelkanäle miteinander verbunden oder an dieselbe Druckquelle angeschlossen sind. Als besonders geeignet hat sich eine Anzahl von drei bis fünf Druckkammern erwiesen. Um eine axiale Auslenkung der Bohrungsachse gegenüber der Antriebswellenachse auszuschließen, ist es sinnvoll, den Bereich der radialen Pressung entsprechend zu dimensionieren. Deshalb sollte die axiale Erstreckung der Druckkammer mindestens etwa die Hälfte der Gesamtlänge des Werkzeugträgers betragen. Als Druckmittel kommt Hydrauliköl oder Fett in Be- tracht, wobei das Drucksystem vorzugsweise als so- genanntes geschlossenes System ausgelegt ist. Es kann jedoch auch als offenes System ausgelegt sein.

Der erfindungsgemäß Werkzeugträger ist nachstehend anhand der Zeichnung näher erläutert. Es zeigen:

Fig. 1 einen Axialschnitt durch einen Werkzeugträger mit Werkzeug, beispielsweise einem Kreissägeblatt;

Fig. 2 einen Schnitt nach der Linie II-II in Fig. 1;

Fig. 3 eine erste Ausführungsvariante der Axialsicherung;

Fig. 4 eine zweite Ausführungsvariante der Axialsicherung;

Fig. 5 einen Schnitt nach der Linie V-V in Fig. 4;

Fig. 6 eine Ausführungsvariante zu Fig. 5.

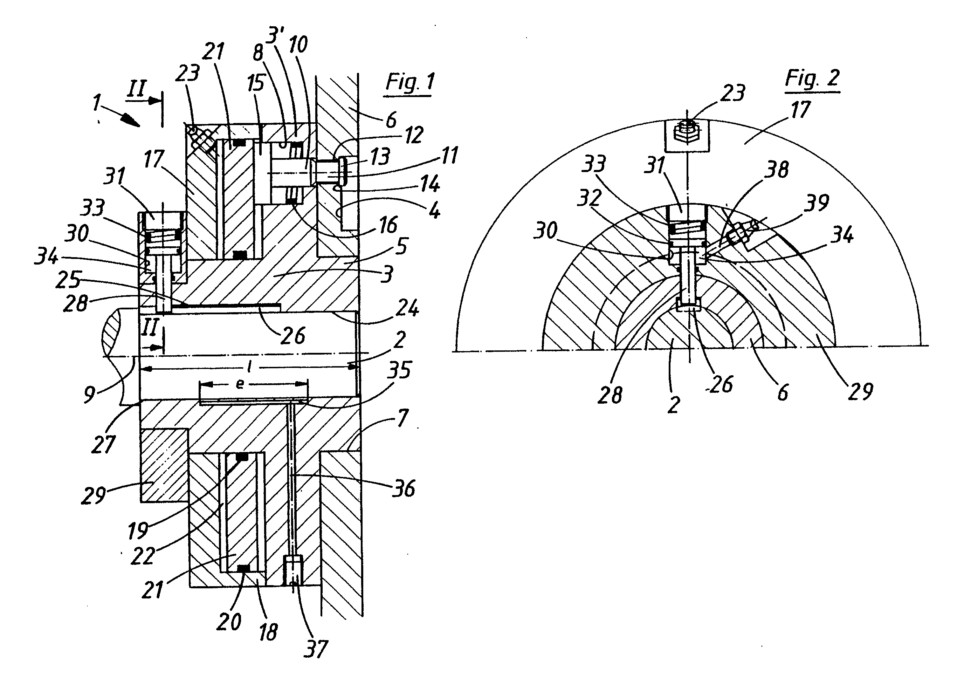

In Fig. 1 ist ein Werkzeugträger 1 dargestellt, der auf einer Antriebswelle 2 befestigt ist. Der Werkzeugträger 1 umfaßt im wesentlichen ein Nabenteil 3 mit einer sich radial erstreckenden Flanschfläche 4 und einem zentrischen Ansatz 5, auf den ein Werkzeug 6 mit seiner zentralen Öffnung 7 aufsteckbar ist, so daß dieses an der Flanschfläche 4 anliegt. In dem Nabenteil 3 sind in einem die Flanschfläche 4 bildenden radialen Abschnitt 3′ über den Kreisumfang gleichmäßig verteilt mehrere Sacklochbohrungen 8 vorgesehen, in denen parallel zur Rotationsachse 9 verschiebbare Spannelemente 10 angeordnet sind. Das Spannelement 10 greift mit einem Schaft 11 durch eine entsprechende Öffnung 12 im Werkzeug 6, und ein am Ende des Schaftes 11 angeformter Spannkopf 13 liegt in einer radialen Ausnehmung 14 der Öffnung 12. Auf der dem Spannkopf 13 abgewandten Seite weist das Spannelement 10 einen radialen Bund 15 auf, der von einer in der Sacklochbohrung 8 angeordneten Feder 16 derart beaufschlagt ist, daß der Spannkopf 13 in die radiale Ausnehmung 14 gezogen wird.

Auf der dem Werkzeug 6 abgewandten Seite des radialen Abschnitts 3′ ist auf dem Nabenteil 3 ein im wesentlichen topfförmiges Gehäuseteil 17 befestigt, dessen zylindrischer Abschnitt 18 an dem radialen Abschnitt 3′ anliegt und bezüglich seines Außendurchmessers diesem angepaßt ist. Zwischen dem Gehäuseteil 17 und dem Nabenteil 3 bzw. 3′ wird ein ringförmiger Druckraum 22 gebildet, in dem ein mit innerer Dichtung 19 und äußerer Dichtung 20 versehener Ring 21 axial verschiebbar gelagert ist. Auf einer Seite steht der Ring 21 mit dem radialen Bund 15 des Spannelementes in Wechselwirkung, während die andere Seite des Ringes 21 druckbeaufschlagbar ist zum Zwecke des Entriegelns des Werkzeugs 6 durch Abheben des Spannkopfes 13 aus der radialen Ausnehmung 14. Das Werkzeug 6 kann dann in an sich bekannter Weise bajonettartig entnommen werden. Das Druckmittel, beispielsweise Hydrauliköl oder Fett, wird durch einen Anschlußnippel 23 dem Druckraum 22 zugeführt.

Das Nabenteil 3 besitzt eine zentrische Bohrung 24, deren Durchmesser demjenigen der Antriebswelle 2 entspricht. In der Bohrung 24 ist eine axiale Nut 25 angeordnet, in die ein Wellenkeil 26 eingreift. Die Antriebswelle 2 besitzt eine radiale Schulter 27, an der der Werkzeugträger zur Anlage kommt, wenn er vollständig auf die Antriebswelle 2 aufgeschoben ist. Ein radial verschiebbarer Sicherungsstift 28 hintergreift in dieser Endlage des Werkzeugträgers 1 den Wellenkeil 26 und verhindert somit ein ungewolltes Herunterrutschen des Werkzeugträgers 1 von der Antriebswelle 2. Der Sicherungsstift 28 ist durch das Nabenteil 6 in ein auf letzterem montiertes Ringbauteil 29 geführt und ragt dort in eine Sacklochbohrung 30. An dem in der Sacklochbohrung 30, die durch eine Schraube 31 verschlossen ist, befindlichen Ende weist der Sicherungsstift 28 einen Bund 32 auf, der auf einer Seite von der Kraft einer Feder 33 beaufschlagt ist und auf der anderen Seite einen Druckraum 34 begrenzt. Durch Einleitung von pneumatischem oder hydraulischem Druck in den Druckraum 34 kann der Sicherungsstift 28 radial nach außen gegen die Kraft der Feder 33 verschoben werden, wodurch er über den Wellenkeil 26 angehoben und die Entnahme des Werkzeugträgers 1 von der Antriebswelle möglich wird.

Wie aus der unteren Hälfte in Fig. 1 ersichtlich ist, erstrecken sich in dem Nabenteil 3 in der Nähe der Antriebswelle 2 und parallel zu dieser mehrere Druckkammern 35, die über den Kreisumfang gleichmäßig verteilt sind. In der Schnittdarstellung von Fig. 1 ist selbstverständlich nur eine der Druckkammern 35 sichtbar. Im Bereich der Druckkammern 35 ist die Wandstärke des Nabenteils 3 zur Antriebswelle 2 gering, so daß abhängig vom in der Druckkammer 35 herrschenden Druck eine radiale Verjüngung des Querschnitts der Bohrung 24 erfolgt. Zur Druckbeaufschlagung der Druckkammer 35 sind diese mit Druckmittelkanälen 36 verbunden, durch die Öl oder Fett als Druckmittel eingepreßt werden kann. Der dargestellte Druckmittelkanal 36 ist mittels einer Schraube 37 verschlossen. Er könnte jedoch auch mit einem Anschlußnippel versehen sein. Die axiale Erstreckung e reicht über einen wesentlichen Teil der Gesamtlänge 1 des Werkzeugträgers. Sie beträgt in dem Ausführungsbeispiel der Fig. 1 etwa e = $\frac{1}{2}$. Durch diese Anordnung von Druckkammern 35 kann der Werkzeugträger mühelos und spielfrei auf der Antriebswelle 2 nach Art eines Radialpreßverbandes befestigt werden.

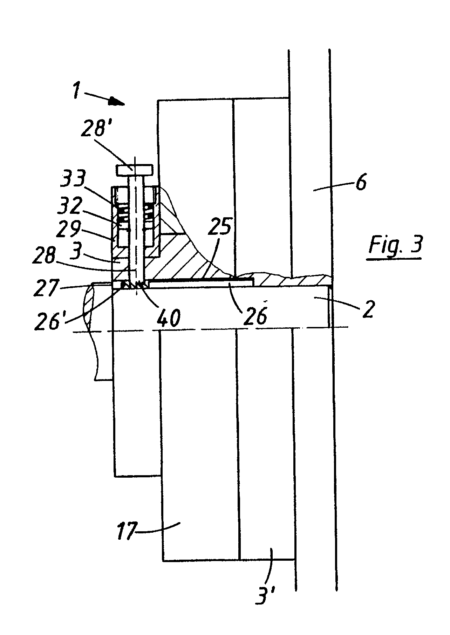

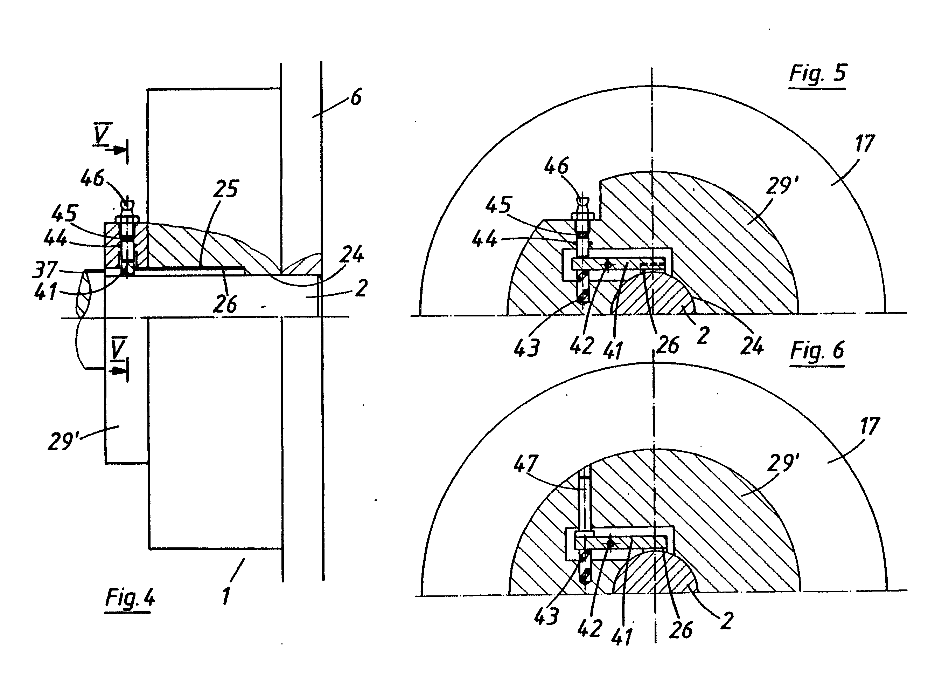

In Fig. 2 ist der radiale Schnitt durch den Werkzeugträger 1 in der Ebene des Sicherungsstiftes 28 dargestellt. Für gleiche Teile stimmen die Bezugszeichen mit denjenigen der Fig. 1 überein. Im Zentrum ist die Antriebswelle 2 mit dem Wellenkeil 26 zu sehen, vor dem der Sicherungsstift 28 auf der Wellenoberfläche aufliegt, weil dieser von der Feder 33 radial nach innen beaufschlagt ist. In den Druckraum 34 mündet ein Kanal 38, an dessen äußerem Ende ein Anschlußnippel 39 angeordnet ist. Bei der Ausführungsform gemäß Fig. 3 ist das der Schulter 27 zugewandte Ende des Wellen keils 26 als Zahnstangenabschnitt 26' ausgebildet, in die entsprechende Zähne 40 an der Unterseite des Sicherungsstiftes 28 eingreifen. Der Zahnstangenabschnitt 26' und die Zähne 40 sind so geformt, daß in Aufschieberichtung des Werkzeugträgers 1 schräge Flächen aneinandergleiten und die Zähne in der Endlage einrasten. In der Abziehrichtung des Werkzeugträgers 1 gesehen, liegen orthogonal zur Rotationsachse 9 verlaufende Zahnflanken aneinander, so daß nur bei Kraftbeaufschlagung in Entkoppelungsrichtung des Sicherungsstiftes 28 die formschlüssige Verbindung der Zähne außer Eingriff gebracht werden kann. Im Gegensatz zu dem Ausführungsbeispiel in Fig. 1 und 2 ist der Sicherungsstift 28 in Entkoppelungsrichtung manuell betätigbar; zu diesem Zwecke ist an dem aus dem Ringbauteil 29 hervorstehenden Ende des Sicherungsstiftes ein Kopfteil 28' angeformt. Im übrigen stimmen die Bezugszeichen für gleiche Teile mit denjenigen der Fig. 1 bzw. 2 überein. Das Ausführungsbeispiel in den Fig. 4 und 5 zeigt einen Werkzeugträger, der anstelle des Sicherungsstiftes in Fig. 1 bis 3 eine Sperrklinke 41 besitzt, die um eine Achse 42 schwenkbar ist. Während das in Fig. 5 rechte Ende der Sperrklinke 41 hinter den Wellenkeil 26 greift und auf der Antriebswelle 2 aufliegt, ist das linke Ende einerseits von einer Feder 23 belastet, die die Sperrklinke 41 in die Arretierstellung bewegt, und andererseits steht dieses Ende mit einem druckbeaufschlagbaren Kolben 44 in Wechselwirkung, der eine Druckkammer 45 begrenzt. Über einen Anschlußnippel 46 wird der Druckkammer zum Zwecke der Entriegelung der Sperrklinke 41 Druck zugeführt. Wie ferner aus Fig. 4 und 5 ersichtlich ist, hat das Ringbauteil 29' die gleiche zentrische Bohrung wie das Flanschteil 6. Es befindet sich somit direkt auf der Antriebswelle 2 und bildet den an der Schulter 27 liegenden Teil des Werkzeugträgers 1.

In Fig. 6 ist eine Ausführungsvariante zu Fig. 5 dargestellt, bei der die Sperrklinke 41 nicht mittels eines Fluiddruckes, sondern mittels eines Werkzeugs betätigbar ist. Zu diesem Zweck steht die Sperrklinke mit einem Bolzen 47 in Wechselwirkung, der durch ein Werkzeug, beispielsweise einen Durchschlag oder dgl., entgegen der Kraft der Feder 43 bewegbar ist.

Es ist bei den Ausführungen mit Sperrklinke 41 ebenfalls möglich, an dem mit dem Wellenkeil 26 zusammenwirkenden Ende Zähne anzuordnen und den Wellenkeil 26 mit einem Zahnstangenabschnitt 26' zu versehen.

**Ansprüche**

1. Werkzeugträger für Rotationswerkzeuge, insbesondere für Kreissägeblätter, Zerspaner usw., mit einer Schnellwechsel-Spannvorrichtung, der im wesentlichen ein Nabenteil mit einer zentrischen Bohrung zur Aufnahme der Antriebswelle umfaßt, dadurch gekennzeichnet, daß in dem Nabenteil (3) nahe der Antriebswelle (2) Mittel zur Erzeugung einer radialen Pressung vorgesehen sind und daß eine Einrichtung vorhanden ist, die den Werkzeugträger (1) auf der Antriebswelle (2) in axialer Richtung sichert.

2. Werkzeugträger nach Anspruch 1, dadurch gekennzeichnet, daß die Einrichtung zur axialen Sicherung des Werkzeugträgers (1) einen Sicherungsstift (28) umfaßt, der radial nach innen von der Kraft einer Feder (33) beaufschlagt ist und hinter eine radiale Kante der Antriebswelle (2) greift.

3. Werkzeugträger nach Anspruch 2, dadurch gekennzeichnet, daß die Einrichtung zur axialen Sicherung des Werkzeugträgers (1) eine von der Kraft einer Feder (43) beaufschlagte und um eine Achse (42) schwenkbare Sperrklinke (41) ist, die mit einem Ende hinter eine radiale Kante der Antriebswelle (2) greift.

4. Werkzeugträger nach Anspruch 2 oder 3, dadurch gekennzeichnet, daß die radiale Kante durch einen auf der Antriebswelle (2) montierten Wellenkeil (26) gebildet ist.

5. Werkzeugträger nach Anspruch 4, dadurch gekennzeichnet, daß der Wellenkeil (26) einen Zahnstangenabschnitt (26') umfaßt, in den Zähne (40) des Sicherungsstiftes (28) oder der Sperrklinke (41) eingreifen.

6. Werkzeugträger nach Anspruch 3, dadurch gekennzeichnet, daß die Sperrklinke (41) mit einem Kolben (44) oder einem Bolzen (47) in Wechselwirkung steht, durch den die Sperrklinke (41) entgegen der Kraft der Feder (43) in eine Entriegelungsstellung bringbar ist.

7. Werkzeugträger nach Anspruch 2,
dadurch gekennzeichnet, daß der Sicherungsstift (28) einen Bund (32) aufweist, der in einer Bohrung (30) dichtend geführt ist und einen Druckraum (34) begrenzt und auf der anderen Seite des Bundes (32) die Feder (33) angeordnet ist.

8. Werkzeugträger nach Anspruch 6 oder 7,
dadurch gekennzeichnet, daß zum Zwecke der Entriegelung der Kolben (44) oder der Bund (32) mittels pneumatischem oder hydraulischem Druck beaufschlagbar sind und somit die Sperrklinke (41) oder den Sicherungsstift (28) gegen die Kraft der Feder (43, 33) bewegen.

9. Werkzeugträger nach Anspruch 2,
dadurch gekennzeichnet, daß der Sicherungsstift (28) an seinem äußeren Ende einen Kopfteil (28') zur manuellen Betätigung der Entriegelungseinrichtung aufweist.

10. Werkzeugträger nach einem der Ansprüche 2 bis 9,
dadurch gekennzeichnet, daß der Sperrstift (28) oder die Sperrklinke (41) in einem Ringbauteil (29, 29') angeordnet ist, das an oder auf dem Nabenteil (3) montiert ist.

11. Werkzeugträger nach einem der vorhergehenden Ansprüche,
dadurch gekennzeichnet, daß die Mittel zur Erzeugung der radialen Pressung mindestens eine im Nabenteil (3) in der Nähe der Antriebswelle (2) angeordnete und parallel zu dieser verlaufende Druckkammer (35) umfaßt, in die ein Druckmittelkanal (36) mündet, wobei vorzugsweise über den Kreisumfang gleichmäßig verteilt mehrere, beispielsweise drei bis fünf, Druckkammern (35) angeordnet sind, die über Druckmittelkanäle miteinander verbunden oder an dieselbe Druckquelle angeschlossen sind und eine Druckkammer (35) eine axiale Erstreckung (e) hat, die mindestens etwa der Hälfte der Gesamtlänge (1) des Werkzeugträgers (1) entspricht.

Fig. 1

Fig. 2

EP 0 427 090 A2

Fig. 3

Fig. 5

Fig. 6

Fig. 4